# EUROPEAN PATENT SPECIFICATION

(11) **EP 4 357 101 B1**
(45) Date of publication and mention of the grant of the patent: **26.11.2025**
(21) Application number: 22887555.5
(22) Date of filing: 25.10.2022
(51) Int. Cl.: B29C 43/10, B29C 43/04, B29C 43/36, B29C 51/26, B29L 31/00, H01M 50/105, H01M 10/04

(54) **POUCH MOLDING APPARATUS**
BEUTELFORMVORRICHTUNG
APPAREIL DE MOULAGE DE POCHE

(30) Priority: 27.10.2021 KR 20210145041
(43) Date of publication of application: 24.04.2024
(73) Proprietor: LG Energy Solution, Ltd., Seoul 07335 (KR)
(72) Inventor: KIM, Shin Chul, Daejeon 34122 (KR); PARK, Sung Chul, Daejeon 34122 (KR); KO, Byung Kwan, Daejeon 34122 (KR)
(74) Representative: Plasseraud IP
(86) International application number: PCT/KR2022/016342
(87) International publication number: WO 2023/075359

(56) References cited:
- WO-A1-2015/045797
- CN-B- 101 259 498
- KR-A- 20080 082 799
- KR-A- 20180 118 929
- KR-A- 20200 061 034
- KR-B1- 102 296 250
- KR-B1- 102 296 253
- US-A1- 2014 260 495

## Description

### TECHNICAL FIELD

### TECHNICAL FIELD

The present invention relates to a pouch molding apparatus, and more particularly, to a pouch molding apparatus, in which a second stripper uniformly and strongly presses a pouch film around a cup part molding position of the pouch film to minimize an occurrence of wrinkles around the cup part, prevent cracks or fractures, which may occur due to the wrinkles, and improve molding quality, thereby achieving space efficiency of the cup part and maximizing energy density.

### BACKGROUND ART

A secondary battery refers to a battery that is chargeable and dischargeable, unlike a primary battery that is not charged, and examples of the secondary battery may include a nickel cadmium battery, a nickel hydrogen battery, a lithium ion battery, and a lithium ion polymer battery. Such a secondary battery is being applied to be used in small-sized products such as digital cameras, notebooks, mobile phones, PDAs, E-bikes, and the like as well as large-sized products requiring high power such as electric vehicles and hybrid vehicles, power storage devices for storing surplus power or renewable energy, and backup power storage devices.
Documents KR102296250B1, KR102296253B1, CN101259498B, KR20200061034A, KR20180118929A describe pouch moulding apparatuses.

Such a secondary battery is classified into a pouch-type secondary battery and a can type secondary battery according to a material of a battery case accommodating an electrode assembly. In the pouch-type secondary battery, the electrode assembly is accommodated in a pouch made of a flexible polymer material having a variable shape. In addition, in the can type secondary battery, an electrode assembly is accommodated in a case made of a metal or plastic material having a predetermined shape.

A pouch, which is a case of the pouch type secondary battery, is manufactured by forming a cup part by performing press processing on a pouch film having flexibility. In addition, when the cup part is formed, an electrode assembly is accommodated in an accommodation space of the cup part, and then, a side of the cup part is sealed to manufacture a secondary battery.

In the press processing, draw-molding is performed by inserting a pouch film into a molding device such as a press equipment and applying a pressure to the pouch film by using a punch to draw the pouch film. The pouch molding apparatus may be divided into a stripper area for fixing the pouch and a punch area. Ideally, after fixing the pouch by applying a uniform surface pressure on the stripper area, the pouch film is molded by applying a pressure through a punch. However, since flatness of a pressing surface on the stripper area is uneven, or surface pressure is applied through the wide pressing surface, the pouch film may not be strongly held around the cup part in which stretching of the pouch film occurs.

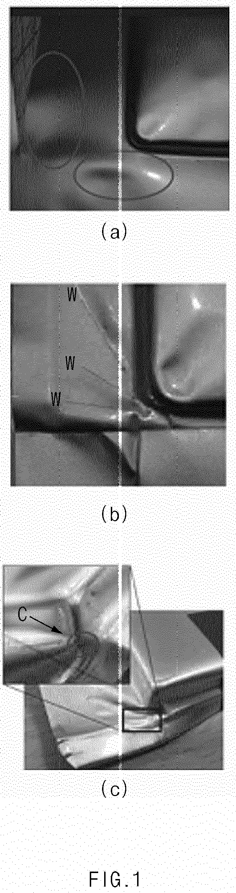

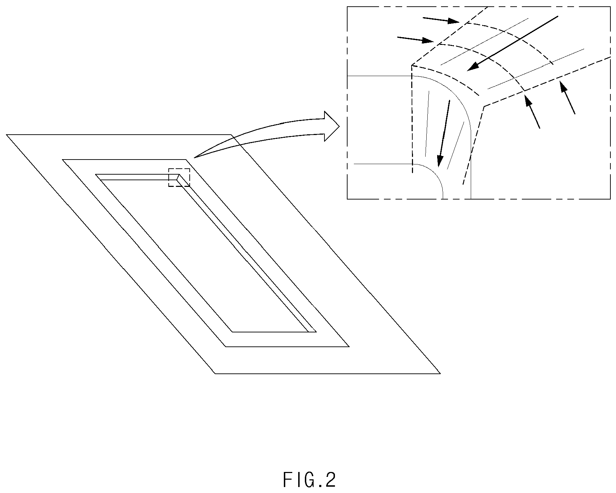

FIG. 1 is a view illustrating a state in which wrinkles or cracks occur in a pouch according to the related art. FIG. 2 is a view illustrating a state in which wrinkles are concentrically formed in a cup part according to the related art. As a result, as illustrated in FIGS. 1 and 2, an insertion of the pouch film may non-uniformly occur, and as a result, as illustrated in (a) and (b) of FIG. 1, wrinkles W may occur around a pouch molding part.

Particularly, referring to FIG. 2, the wrinkles are concentrically formed at a corner of the cup part of the pouch in which stretching of the pouch film is concentrated, and the wrinkles may cause cracks (C) due to an impact during movement of logistics (see (c) of FIG. 1), which are directly related to battery performance and safety. Therefore, development of a pouch molding apparatus for solving the above problems is required.

### DISCLOSURE OF THE INVENTION

### TECHNICAL PROBLEM

The present invention has been made to solve the above problem, and an object of the present invention is to provide a pouch molding apparatus, in which a second stripper uniformly and strongly presses a pouch film around a cup part molding position of the pouch film to minimize an occurrence of wrinkles around the cup part, prevent cracks or fractures, which may occur due to the wrinkles, and improve molding quality, thereby achieving space efficiency of the cup part and maximizing energy density.

### TECHNICAL SOLUTION

A pouch molding apparatus according to the present invention include: a die plate which has a flat plate shape so that a pouch film is seated on an upper portion thereof and in which a cup part molding hole having a shape passing through top and bottom surfaces thereof is formed; a first stripper which is configured to press and fix the pouch film from an upper side of the die plate and in which a punch hole having a shape passing through top and bottom surfaces thereof is formed at a position corresponding to the cup part molding hole; a punch part drawn in and out of the punch hole of the first stripper and the cup part molding hole of the die plate to mold the pouch film; and a second stripper provided to protrude from a bottom surface of the first stripper and provided along a circumference of the punch hole to press and fix the pouch film.

The second stripper may be formed in a ring shape having an inner circumference and an outer circumference, wherein the inner circumference may be greater than a circumference of the punch hole.

In the second stripper, a friction coating layer may be formed on a surface facing the die plate.

The friction coating layer may include silicon.

The first stripper may be formed along a circumference of the punch hole, wherein an insertion hole having a shape that is recessed upward from a lower portion of the first stripper may be formed in the first stripper.

The insertion groove may have a horizontal cross-section having a shape corresponding to that of a horizontal cross-section of the second stripper, and the second stripper may be provided to protrude from a bottom surface of the first stripper, wherein the second stripper is provided to be drawn in or out of the insertion groove so as to be vertically movable.

The pouch molding apparatus may further include: an upper plate provided above the first stripper; and a lower plate provided below the die plate, wherein the upper plate and the lower plate may be coupled to each other at an edge by a coupling member having a length in a vertical direction.

The pouch molding apparatus may further include: a stripper back plate provided between the first stripper and the upper plate to fix at least one of the first stripper or the second stripper; and a die back plate provided between the lower plate and the die plate to support the die plate from a lower side.

The first stripper may be formed along a circumference of the punch hole, wherein a through-hole passing through top and bottom surfaces of the first stripper may be formed in the first stripper, and the second stripper may be fixed to the stripper back plate by a fixing member provided to pass through the through-hole.

The fixing member may be provided in a stopper manner in which a length is changed, but is not changed to a predetermined length or less or the predetermined length or more, but is fixed.

In the second stripper, pouch film pressing force may be adjusted by a pressing force adjusting member provided to pass through the through-hole.

The pressing force adjusting member may include a spring having elasticity in a longitudinal direction.

The pressing force adjusting member may be provided to have one side that is in contact with the second stripper and the other side coupled to the stripper back plate.

The pressing force adjusting member may be provided to have one side that is in contact with the second stripper and the other side coupled to the upper plate.

The punch part may include: a punch body; and a punch which is provided below the punch body and on which a pressing surface configured to press the pouch film is formed.

The first stripper may be formed along a circumference of the punch hole, wherein a through-hole passing through top and bottom surfaces of the first stripper is formed in the first stripper, and the second stripper may be fixed to the upper plate by a fixing member provided to pass through the through-hole.

In the second stripper, pouch film pressing force may be adjusted by a pressing force adjusting member provided to pass through the through-hole, and the pressing force adjusting member may be provided to have one side that is in contact with the second stripper and the other side coupled to the upper plate.

### ADVANTAGEOUS EFFECTS

The pouch molding apparatus according to the present invention may include the die plate which has the flat plate shape so that the pouch film is seated on the upper portion thereof and in which the cup part molding hole having the shape passing through the top and bottom surfaces thereof is formed, the first stripper which is configured to press and fix the pouch film from the upper side of the die plate and in which the punch hole having the shape passing through the top and bottom surfaces thereof is formed at the position corresponding to the cup part molding hole, the punch part drawn in and out of the punch hole of the first stripper and the cup part molding hole of the die plate to mold the pouch film, and the second stripper provided to protrude from the bottom surface of the first stripper and provided along the circumference of the punch hole to press and fix the pouch film. Therefore, the second stripper may uniformly and strongly press the pouch film around the cup part molding position of the pouch film to minimize the occurrence of the wrinkles around the cup part, prevent the cracks or fractures, which may occur due to the wrinkles, and improve the molding quality, thereby achieving the space efficiency of the cup part and maximizing the energy density.

### BRIEF DESCRIPTION OF THE DRAWINGS

FIG. 1 is a view illustrating a state in which wrinkles or cracks occur in a pouch according to a related art.
FIG. 2 is a view illustrating a state in which wrinkles are concentrically formed in a cup part according to the related art.
FIG. 3 is a perspective view of a pouch molding apparatus according to Embodiment 1 of the present invention.
FIG. 4 is a side view of the pouch molding apparatus according to Embodiment 1 of the present invention.
FIG. 5 is an exploded perspective view illustrating some of constituents of the pouch molding apparatus according to Embodiment 1 of the present invention.
FIG. 6 is a bottom perspective view illustrating a first stripper of the pouch molding apparatus according to Embodiment 1 of the present invention.
FIG. 7 is a bottom perspective view illustrating first and second strippers of the pouch molding apparatus according to Embodiment 1 of the present invention.
FIG. 8 is a side view illustrating the first stripper and a stripper back plate in the pouch molding apparatus according to Embodiment 1 of the present invention.
FIG. 9 is a transparent perspective view illustrating the first stripper and the stripper back plate of some of the constituents of the pouch molding apparatus according to Embodiment 1 of the present invention.
FIG. 10 is a transparent perspective view illustrating a first stripper and a stripper back plate in a pouch molding apparatus according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

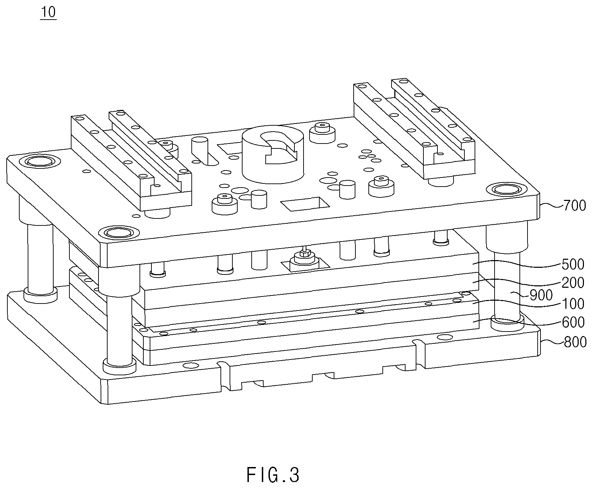

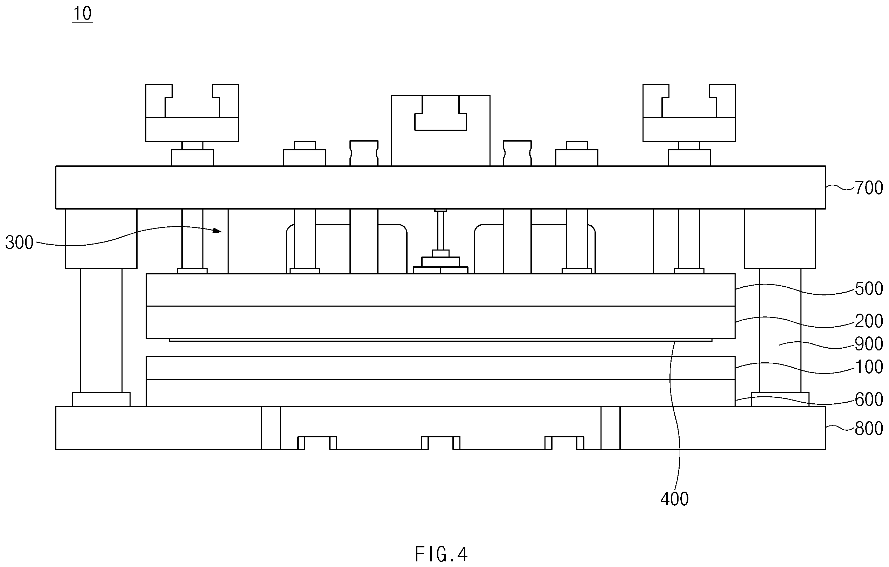

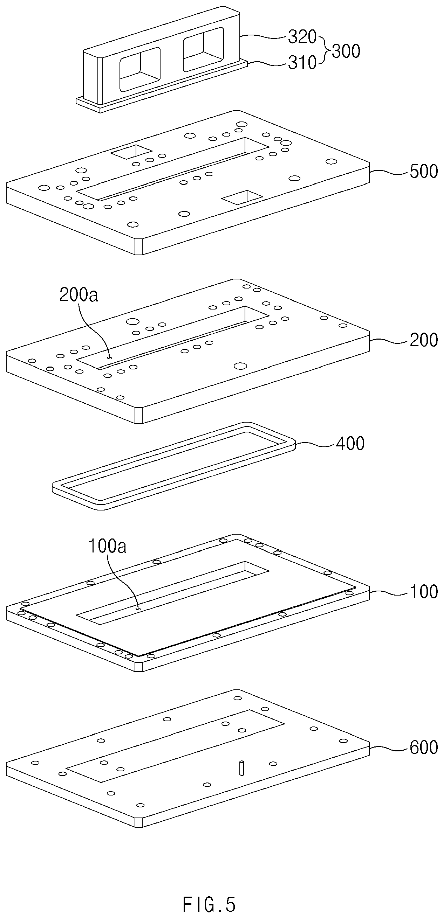

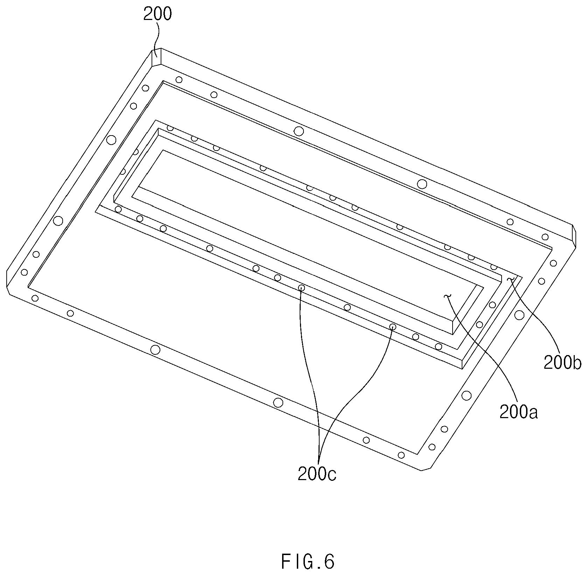

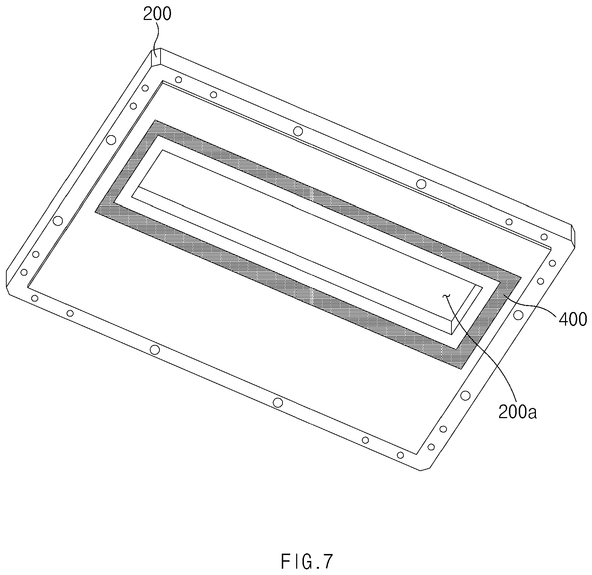

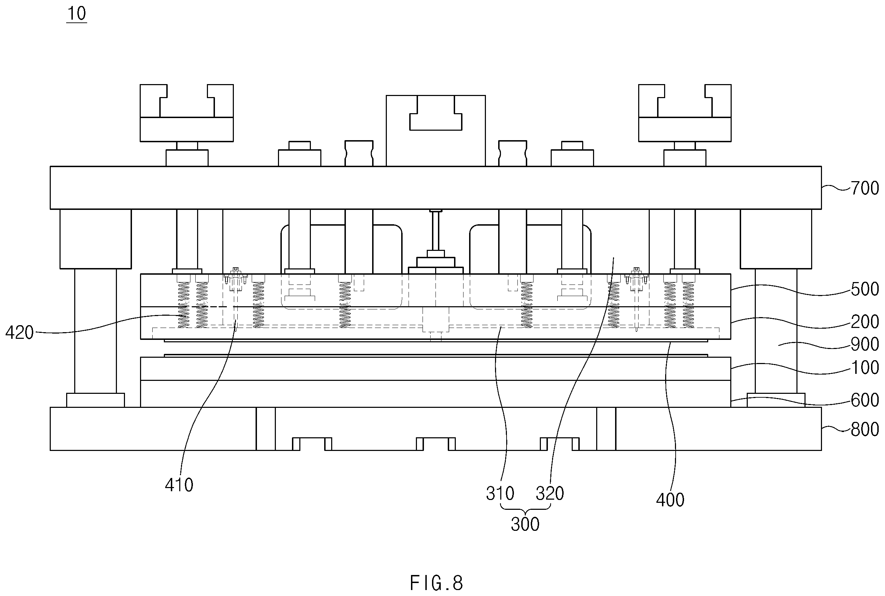

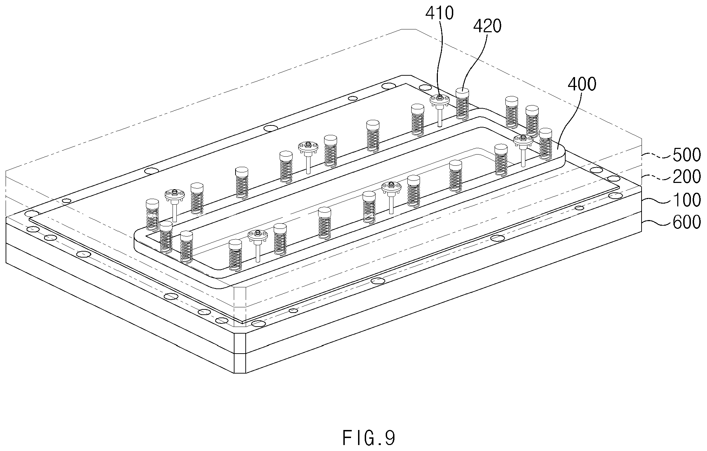

FIG. 3 is a perspective view of a pouch molding apparatus according to Embodiment 1 of the present invention. FIG. 4 is a side view of the pouch molding apparatus according to Embodiment 1 of the present invention. FIG. 5 is an exploded perspective view illustrating some of constituents of the pouch molding apparatus according to Embodiment 1 of the present invention. FIG. 6 is a bottom perspective view illustrating a first stripper of the pouch molding apparatus according to Embodiment 1 of the present invention. FIG. 7 is a bottom perspective view illustrating first and second strippers of the pouch molding apparatus according to Embodiment 1 of the present invention. FIG. 8 is a side view illustrating the first stripper and a stripper back plate in the pouch molding apparatus according to Embodiment 1 of the present invention. FIG. 9 is a transparent perspective view illustrating the first stripper and the stripper back plate of some of the constituents of the pouch molding apparatus according to Embodiment 1 of the present invention.

Referring to FIGS. 3 to 5, a pouch molding apparatus 10 according to the present invention includes a die plate 100, a first stripper 200, a punch part 300, and a second stripper 400.

First, the die plate 100 is formed in a flat plate shape so that a pouch film is seated thereon, and a cup part molding hole 100a passing through top and bottom surfaces is formed in the die plate 100. That is, in a state in which the pouch film is seated on an upper portion of the die plate 100, the punch part 300 to be described later passes through a cup part molding hole 100a to mold a cup part of a pouch. Thus, the die plate 100 serves to support or fix the pouch film from a lower side. The die plate 100 may be formed in a flat plate shape to support or fix the pouch film so that a uniform surface pressure is applied to the pouch film seated on the die plate 100.

The first stripper 200 presses the pouch film from the upper side of the die plate 100 to fix the pouch film, and a punch hole 200a passing through the top and bottom surfaces is formed at a position corresponding to the cup part molding hole 100a. That is, the pouch film may be supported by the die plate 100 from a lower side and be pressed and fixed by the first stripper 200 from an upper side. It is unnecessary that the pouch film is seated on the upper portion of the die plate 100, and the first stripper 200 presses and fixes the pouch film from the upper side of the die plate 100. On the contrary, the pouch film may be seated on the upper portion of the first stripper 200, and the die plate 100 may press and fix the pouch film from the upper side of the first stripper 200.

The punch part 300 is drawn in and out of the punch hole 200a of the first stripper 200 and the cup part molding hole 100a of the die plate 100 to mold the pouch film. Here, the punch part 300 is first inserted into the punch hole 200a of the first stripper 200 and then inserted into the cup part molding hole 100a of the die plate 100 to press the pouch film, thereby molding the cup part. When the cup part is completely molded, the punch part 300 may be drawn out of the cup part molding hole 100a of the die plate 100 and then drawn out of the punch hole 200a of the first stripper 200.

The second stripper 400 is provided to protrude from a bottom surface of the first stripper 200 and is provided along a circumference of the punch hole 200a to press and fix the pouch film. As a result, the second stripper 400 may uniformly and strongly press the pouch film around a cup part molding position of the pouch film to minimize an occurrence of wrinkles around the cup part, prevent cracks or fractures, which may occur due to the wrinkles, and improve molding quality, thereby achieving space efficiency of the cup part and maximizing energy density.

Hereinafter, each of the constitutes of the pouch molding apparatus 10 according to the present invention will be described in more detail.

Referring to FIGS. 5 and 7, the second stripper 400 may be formed in a ring shape having an inner circumference and an outer circumference, and the inner circumference may be formed to be greater than a circumference of the punch hole 200a. Since the second stripper 400 is provided along the circumference of the punch hole 200a, when the inner circumference is formed to be less than the circumference of the punch hole 200a, the second stripper 400 may interfere with the punch part 300 passing through the punch hole 200a of the first stripper 200, and thus, movement of the second stripper 400 may occur, or punching of the punch part 300 may not properly performed to deteriorate the molding quality of the pouch cup part. Thus, the inner circumference of the second stripper 400 is formed to be greater than the circumference of the punch hole 200a, and thus, the second stripper 400 may not interfere with the punch part 300 and may press uniformly and effectively the pouch film.

A friction coating layer may be formed on a surface of the second stripper 400, which face the die plate 100. Since the pouch film is seated on the die plate 100, the surface facing the die plate 100 in the second stripper 400 may be understood as the same as the pressure surface on which the second stripper 400 presses the pouch film. As described above, the friction coating layer is formed on the surface of the second stripper 400, which faces the die plate 100, and thus, the frictional force between the second stripper 400 and the pouch film may increase. As a result, since the second stripper 400 more uniformly and strongly press the pouch film, an occurrence of wrinkles around the cup part molding position may be suppressed.

The friction coating layer may include a material capable of increasing in frictional force between the second stripper 400 and the pouch film and may preferably include silicone. However, it is not necessarily limited to silicon. For example, a material having no concern of physically and chemically reacting with the pouch film and having frictional coefficient greater than that of the second stripper 400 may be selected as the friction coating layer. In addition to the material having a large frictional coefficient in addition to a specific material, the frictional coefficient may increase by varying in shape or roughness of the surface.

Referring to FIGS. 5 and 6, the first stripper 200 may be formed along the circumference of the punch hole 200a and may have an insertion groove 200b having a shape that is recessed upward from the lower side. The shape recessed upward from the lower side may be understood as the same as a shape recessed from one surface to the other surface of the first stripper 200 having a thickness. However, here, the one surface may be a surface of the first stripper 200, which is provided with the second stripper 400, and the other surface may be a surface that is opposite to the one side of the first stripper 200. As described above, the insertion groove 200b is formed in the first stripper 200. Thus, as described below, the second stripper 400 may be drawn in or out of the insertion groove 200b, and thus, pressing force of the second stripper 400 may be appropriately adjusted.

Continuously, referring to FIGS. 6 to 8, the insertion groove 200b may be formed to have a horizontal cross-section having a shape corresponding to that of a horizontal cross-section of the second stripper 400, and the second stripper 400 may be provided to protrude from the bottom surface of the first stripper 200 and may be drawn in or out of the insertion groove 200b so as to be vertically movable. The insertion groove 200b may provide a space in which the second stripper 400 is drawn in or out of the first stripper 200, and for this, the insertion groove 200b may have a shape corresponding to the horizontal cross-section of the second stripper 400. Here, that the insertion groove 200b has the shape corresponding to the horizontal cross-section of the second stripper 400 may mean that the insertion groove 200b has a shape in which the insertion groove 200b has the same size as the horizontal cross-section of the second stripper 400, but has a width that is as large as a size of an offset. If the size of the width of the insertion groove 200b is the same as the size of the width of the second stripper 400, the second stripper 400 may not be inserted into the insertion groove (200b), or even if the second stripper 400 is inserted into the insertion groove 200b, movement may not be smooth due to an interference by a pressure, and as a result, it is impossible to apply appropriate pressing force. Conversely, if the width of the insertion groove 200b is excessively larger than the width of the second stripper 400, when the second stripper 400 presses the pouch film while the second stripper 400 is inserted into the insertion groove 200b, movement in a lateral direction may occur, and thus, it is impossible to apply appropriate pressing force. Therefore, it is preferable that the size of the offset is an appropriate with at which the second stripper 400 is easily inserted into the insertion groove 200b, and after the insertion, movement of the second stripper 400 does not occur in the insertion groove 200b. In fact, the size of the offset may be experimentally determined according to the width of the second stripper 400 to be manufactured.

As described above, the second stripper 400 may be provided in a state of protruding from the bottom surface of the first stripper 200 and may be partially inserted into the insertion groove 200b as the second stripper 400 presses the pouch film. As a result, the pouch film may be appropriately pressed to suppress the occurrence of the wrinkles, and also, the shape of the second stripper 400 may not remain around the cup part molding position to improve the molding quality.

Referring to FIG. 8, the pouch molding apparatus 10 according to the present invention may further include an upper plate 700 and a lower plate 800. The upper plate 700 may be provided above the first stripper 200, and the lower plate 800 may be provided below the die plate 100. Here, the upper plate 700 and the lower plate 800 may be coupled to each other at an edge by a coupling member 900 having a length in a vertical direction. That is, the upper plate 700 is provided at an upper end of the pouch molding apparatus 10, and the punch part 300 and the configuration of the stripper back plate 500 described later may be coupled to be fixed. The lower plate 800 may be provided at the lower end of the pouch molding apparatus 10 to serve to support the entire pouch molding apparatus 10 from the lower side.

In addition, the pouch molding apparatus 10 may further include a stripper back plate 500 and a die back plate 600. The stripper back plate 500 is provided between the first stripper 200 and the upper plate 700 to fix at least one of the first stripper 200 or the second stripper 400. The die back plate 600 is provided between the lower plate 800 and the die plate 100 to support the die plate 100 from the lower side. As described above, the first stripper 200, the second stripper 400, and the die plate 100 may be in direct contact with the pouch film to serve to press the pouch film, and the stripper back plate 500 and the die back plate 600 may be provided above or below the stripper, and thus, the first and second strippers and the die plate 100 may be stably fixed to the pouch molding apparatus 10.

Hereinafter, a method for fixing a second stripper 400 will be described in detail with reference to FIGS. 6, 8 and 9.

First, as illustrated in FIG. 6, a punch hole 200a may be formed along a circumference of a first stripper 200, and a through-hole 200c passing through top and bottom surfaces of the first stripper 200 may be formed in the first stripper 200. Here, as illustrated in FIGS. 8 and 9, a second stripper 400 may be fixed to the stripper back plate 500 by a fixing member 410 passing through the through-hole 200c. As described above, even if the second stripper 400 is provided below the first stripper 200 or inside the insertion groove 200b of the first stripper 200, the second stripper 400 may not be in direct contact with the first stripper 200, but be fixed to the stripper back plate 500 so as to be independently movable in the vertical direction with respect to the firs stripper 200, thereby applying appropriate pressing force to the pouch film. Here, the through-hole 200c may be formed in plurality, and the fixing member 410 may also be formed in plurality. However, the number of through-holes 200c may be the same or less than the number of through-holes 200c to fix the second stripper 400.

The fixing member 410 may be provided in a stopper manner in which a length is changed, but not changed to a predetermined length or less or a predetermined length or more, but is fixed. Here, the meaning of being fixed without changed to the predetermined length or more may mean that the second stripper 400 is fixed to protrude from a bottom surface of the first stripper 200, and also, the second stripper 400 is not changed to a length or more at which the second stripper 400 is fixed to protrude so as not to seat the pouch film between the die plate 100 and the first stripper 200. In addition, the meaning of being fixed without changed to the predetermined length or less may mean that the second stripper 400 is inserted into the insertion groove 200b formed in the first stripper, and also, the second stripper 400 is completely inserted into the insertion groove 200b and is not changed to a length or less at which the second stripper 400 does not protrude.

The second stripper 400 may adjust pressing force of pressing the pouch film by a pressing force adjusting member provided to pass through the through-hole 200c in addition to the above fixing member 410. The pressing force adjusting member 420 is provided separately with respect to the fixing member 410, and the second stripper 400 applies force in a direction opposite to the direction in which the first stripper 200 is inserted into the insertion groove 200b so that the second stripper 400 provides pressing force to press the pouch film. Therefore, the pressing force adjusting member 420 may continuously increase in pressing force of the second stripper 400 as the second stripper 400 is inserted into the insertion groove 200b. One side of the pressing force adjusting member 420 may be provided to be in contact with the second stripper 400, and the other side may be provided to be coupled to the stripper back plate 500. The pressing force adjusting member 420 may also be formed in plurality to adjust the pressing force for each position.

The pressing force adjusting member 420 may include a spring having elasticity in a longitudinal direction. Since elastic force increases as the spring is pressed, when the spring is selected as the pressing force adjusting member 420, the pressing force of the second stripper 400 may continuously increase so that the second stripper 400 is inserted into the insertion groove 200b. The pressing force adjusting member 420 may further include a spring fixing member for fixing the other side of the spring to the stripper back plate 500 in addition to the spring.

Next, the punch part 300 may include a punch body 320 and a punch 310 that is provided under the punch body 320 and has a pressing surface for pressing the pouch film. The punch body 320 may be configured to fix the punch part 300 to the pouch molding apparatus 10, and the punch 310 having the pressing surface may have a shape and size of a cup part to be molded as a constitute that directly presses the pouch film.

When the punch body 320 is fixed and does not move in the pouch molding apparatus 10 and moves vertically in a state in which the pouch film interposed between the die plate 100 and the first stripper 200, the cup part may be molded on the pouch film while the punch body 320 and the punch 310 of the punch part 300 pass through a punch hole 200a and a cup part molding hole 100a. However, on the other hand, the die plate 100 and the first stripper 200 may be fixed with the pouch film interposed therebetween, and the punch part 300 may move to mold the cup part.

### Embodiment 2

Embodiment 2 of the present invention is different from Embodiment 1 in that the pressing force adjusting member 420 according to Embodiment 1 is provided so that one side thereof is in contact with the second stripper 400, and the other side thereof is provided to be coupled to the upper plate 700. The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

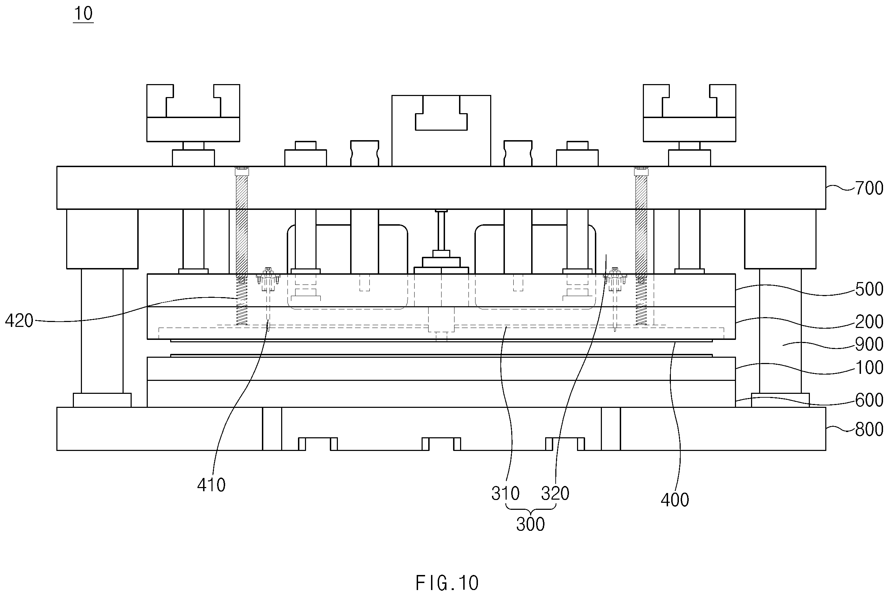

FIG. 10 is a transparent perspective view illustrating a first stripper and a stripper back plate in a pouch molding apparatus according to Embodiment 2 of the present invention.

In a pouch molding apparatus 10 according to Embodiment 2 of the present invention, the pouch molding apparatus 10 includes a die plate 100, a first stripper 200, a punch part 300, and a second stripper 400. In addition, the pouch molding apparatus 10 may further include a stripper back plate 500, a die back plate 600, an upper plate 700, and a lower plate 800.

The first stripper 200 may be formed along a circumference of a punch hole 200a, a through-hole 200c passing through top and bottom surfaces may be formed, and the second stripper 400 may be fixed to the striper back plate 500 by a fixing member 410 provided to pass through the through-hole 200c.

In addition, in the second stripper 400, pouch film pressing force may be adjusted by a pressing force adjusting member 420 provided through the through-hole 200c. Here, the pressing force adjusting member 420 of the pouch molding apparatus 10 according to Embodiment 2 of the present invention may be provided to have one side that is in contact with the second stripper 400 and the other side coupled to the upper plate 700.

As described above, the other side of the pressing force adjusting member 420 may be coupled to the upper plate 700, and thus, the pressing force may be provided more stably compared to a case of being coupled to the stripper back plate 420. When the pressing force adjusting member 420 includes a spring, a length of the spring is formed to be elongated, and thus, pressing force having more various intensities may be provided. The pressing force adjusting member 420 may further include a spring fixing member for fixing the other side of the spring to the stripper back plate 500 in addition to the spring.

### Embodiment 3

Example 3 of the present invention is different from Embodiments 1 and 2 in that the first and second strippers 400 according to Embodiments 1 and 2 are fixed by a fixing member 410, i.e., is not fixed to a stripper back plate 500, but fixed to an upper plate 700. The contents that are duplicated with Embodiments 1 and 2 will be omitted as much as possible, and Embodiment 3 will be described with a focus on the differences. That is, it is obvious that the contents that are not described in Embodiment 3 may be regarded as the contents of Embodiments 1 and 2 if necessary.

Therefore, the pouch molding apparatus 10 according to Embodiment 3 of the present invention includes a die plate 100, a first stripper 200, a punch part 300, and a second stripper 400. In addition, the pouch molding apparatus 10 may further include a die back plate 600, an upper plate 700 and a lower plate 800.

In the pouch molding apparatus 10 according to the third embodiment of the present invention, the first stripper 200 may be formed along a circumference of a punch hole 200a, a through-hole 200c passing through top and bottom surfaces may be formed, and the second stripper 400 may be fixed to the upper plate 700 by a fixing member 410 provided to pass through the through-hole 200c. Therefore, a structure of the pouch molding apparatus may be simplified while maintaining molding quality of the pouch.

The fixing member 410 may be provided in a stopper manner in which a length is changed, but not changed to a predetermined length or less or a predetermined length or more, but is fixed. In addition, the second stripper 400 may adjust pouch film pressing force by a pressing force adjusting member provided to pass through the through-hole 200c. Here, the detailed configurations of the fixing member 410 and the pressing force adjusting member 420 and the resulting effect may be understood as the same as in Embodiment 1.

In addition, in the second stripper 400, pouch film pressing force may be adjusted by a pressing force adjusting member 420 provided through the through-hole 200c. Here, the pressing force adjusting member 420 may be provided to have one side that is in contact with the second stripper 400 and the other side coupled to the upper plate 700.

### [Description of the Symbols]

10: Pouch molding apparatus
100: Die plate
100a: Cup part molding hole
200: First stripper
200a: Punch hole
200b: Insertion groove
200c: Through-hole
300: Punch part
310: Punch
320: Punch body
400: Second stripper
410: Fixing member
420: Pressing force adjusting member
500: Stripper back plate
600: Die back plate
700: Upper plate
800: Lower plate
900: Coupling member

## Claims

1. A pouch molding apparatus (10) comprising:
a die plate (100) which has a flat plate shape so that a pouch film is seated on an upper portion thereof and in which a cup part molding hole (100a) having a shape passing through top and bottom surfaces thereof is formed;
a first stripper (200) which is configured to press and fix the pouch film from an upper side of the die plate and in which a punch hole (200a) having a shape passing through top and bottom surfaces thereof is formed at a position corresponding to the cup part molding hole (100a);
a punch part (300) drawn in and out of the punch hole (200a) of the first stripper (200) and the cup part molding hole (100a) of the die plate (100) to mold the pouch film; and
a second stripper (400) provided to protrude from a bottom surface of the first stripper (200) and provided along a circumference of the punch hole (200a) to press and fix the pouch film.

2. The pouch molding apparatus of claim 1, wherein the second stripper is formed in a ring shape having an inner circumference and an outer circumference,
wherein the inner circumference is greater than a circumference of the punch hole.

3. The pouch molding apparatus of claim 1, wherein, in the second stripper, a friction coating layer is formed on a surface facing the die plate.

4. The pouch molding apparatus of claim 1, wherein the first stripper is formed along a circumference of the punch hole,
wherein an insertion hole having a shape that is recessed upward from a lower portion of the first stripper is formed in the first stripper.

5. The pouch molding apparatus of claim 4, wherein the insertion groove has a horizontal cross-section having a shape corresponding to that of a horizontal cross-section of the second stripper, and
the second stripper is provided to protrude from a bottom surface of the first stripper, wherein the second stripper is provided to be drawn in or out of the insertion groove so as to be vertically movable.

6. The pouch molding apparatus of claim 1, further comprising:
an upper plate provided above the first stripper; and
a lower plate provided below the die plate,
wherein the upper plate and the lower plate are coupled to each other at an edge by a coupling member having a length in a vertical direction.

7. The pouch molding apparatus of claim 6, further comprising:
a stripper back plate provided between the first stripper and the upper plate to fix at least one of the first stripper or the second stripper; and
a die back plate provided between the lower plate and the die plate to support the die plate from a lower side.

8. The pouch molding apparatus of claim 7, wherein the first stripper is formed along a circumference of the punch hole, wherein a through-hole passing through top and bottom surfaces of the first stripper is formed in the first stripper, and
the second stripper is fixed to the stripper back plate by a fixing member provided to pass through the through-hole.

9. The pouch molding apparatus of claim 8, wherein the fixing member is provided in a stopper manner in which a length is changed, but is not changed to a predetermined length or less or the predetermined length or more, but is fixed.

10. The pouch molding apparatus of claim 8, wherein, in the second stripper, pouch film pressing force is adjusted by a pressing force adjusting member provided to pass through the through-hole.

11. The pouch molding apparatus of claim 10, wherein the pressing force adjusting member comprises a spring having elasticity in a longitudinal direction.

12. The pouch molding apparatus of claim 10, wherein the pressing force adjusting member is provided to have one side that is in contact with the second stripper and the other side coupled to the stripper back plate.

13. The pouch molding apparatus of claim 10, wherein the pressing force adjusting member is provided to have one side that is in contact with the second stripper and the other side coupled to the upper plate.

14. The pouch molding apparatus of claim 6, wherein the first stripper is formed along a circumference of the punch hole, wherein a through-hole passing through top and bottom surfaces of the first stripper is formed in the first stripper, and
the second stripper is fixed to the upper plate by a fixing member provided to pass through the through-hole.

15. The pouch molding apparatus of claim 14, wherein, in the second stripper, pouch film pressing force is adjusted by a pressing force adjusting member provided to pass through the through-hole, and
the pressing force adjusting member is provided to have one side that is in contact with the second stripper and the other side coupled to the upper plate.

## Patentansprüche

1. Beutelformvorrichtung (10), umfassend:
eine Stempelplatte (100), welche eine flache Plattenform aufweist, so dass eine Beutelfolie an einem oberen Abschnitt davon sitzt, und in welcher ein Becherteil-Formloch (100a) gebildet ist, welches eine Form aufweist, welche durch obere und untere Flächen davon verläuft;
einen ersten Abstreifer (200), welcher dazu eingerichtet ist, die Beutelfolie von einer oberen Seite der Stempelplatte zu pressen und zu fixieren, und in welchem ein Stanzloch (200a), welches eine Form aufweist, welche durch obere und untere Flächen davon verläuft, an einer Position gebildet ist, welche dem Becherteil-Formloch (100a) entspricht;
einen Stanzteil (300), welcher von dem Stanzloch (200a) des ersten Abstreifers (200) und dem Becherteil-Formloch (100a) der Stempelplatte (100) herein- und herausgezogen wird, um die Beutelfolie zu bilden; und
einen zweiten Abstreifer (400), welcher bereitgestellt ist, um von einer unteren Fläche des ersten Abstreifers (200) hervorzustehen, und welcher entlang eines Umfangs des Stanzlochs (200a) bereitgestellt ist, um die Beutelfolie zu pressen und zu fixieren.

2. Beutelformvorrichtung nach Anspruch 1, wobei der zweite Abstreifer in einer Ringform gebildet ist, welche einen Innenumfang und einen Außenumfang aufweist,
wobei der Innenumfang größer als ein Umfang des Stanzlochs ist.

3. Beutelformvorrichtung nach Anspruch 1, wobei, bei dem zweiten Abstreifer, eine Reibungsbeschichtung an einer Fläche gebildet ist, welche der Stempelplatte zugewandt ist.

4. Beutelformvorrichtung nach Anspruch 1, wobei der erste Abstreifer entlang eines Umfangs des Stanzlochs gebildet ist,
wobei ein Einführloch, welches eine Form aufweist, welche von einem unteren Abschnitt des ersten Abstreifers nach oben vertieft ist, in dem ersten Abstreifer gebildet ist.

5. Beutelformvorrichtung nach Anspruch 4, wobei die Einführnut einen horizontalen Querschnitt aufweist, welcher eine Form entsprechend der eines horizontalen Querschnitts des zweiten Abstreifers aufweist, und
wobei der zweite Abstreifer bereitgestellt ist, um von einer unteren Fläche des ersten Abstreifers hervorzustehen, wobei der zweite Abstreifer bereitgestellt ist, um von der Einführnut herein- und herausgezogen zu werden, um vertikal bewegbar zu sein.

6. Beutelformvorrichtung nach Anspruch 1, ferner umfassend:
eine obere Platte, welche über dem ersten Abstreifer bereitgestellt ist; und
eine untere Platte, welche unter der Stempelplatte bereitgestellt ist,
wobei die obere Platte und die untere Platte an einem Rand durch ein Kopplungselement, welches eine Länge in einer vertikalen Richtung aufweist, miteinander gekoppelt sind.

7. Beutelformvorrichtung nach Anspruch 6, ferner umfassend:
eine Abstreifer-Rückplatte, welche zwischen dem ersten Abstreifer und der oberen Platte bereitgestellt ist, um wenigstens einen aus dem ersten Abstreifer oder dem zweiten Abstreifer zu fixieren; und
eine Stempel-Rückplatte, welche zwischen der unteren Platte und der Stempelplatte bereitgestellt ist, um die Stempelplatte von einer unteren Seite zu haltern.

8. Beutelformvorrichtung nach Anspruch 7, wobei der erste Abstreifer entlang eines Umfangs des Stanzlochs gebildet ist, wobei ein Durchgangsloch, welches durch obere und untere Flächen des Abstreifers verläuft, in dem ersten Abstreifer gebildet ist, und
wobei der zweite Abstreifer an der Abstreifer-Rückplatte durch ein Fixierelement fixiert ist, welches bereitgestellt ist, um durch das Durchgangsloch zu verlaufen.

9. Beutelformvorrichtung nach Anspruch 8, wobei das Fixierelement in der Art eines Stoppers bereitgestellt ist, bei welchem eine Länge geändert ist, jedoch nicht auf eine vorbestimmte Länge oder weniger oder auf die vorbestimmte Länge oder mehr geändert ist, jedoch fixiert ist.

10. Beutelformvorrichtung nach Anspruch 8, wobei, bei dem zweiten Abstreifer, eine Beutelfolie-Presskraft durch ein Presskraft-Anpassungselement angepasst wird, welches bereitgestellt ist, um durch das Durchgangsloch zu verlaufen.

11. Beutelformvorrichtung nach Anspruch 10, wobei das Presskraft-Anpassungselement eine Feder umfasst, welche in einer longitudinalen Richtung eine Elastizität aufweist.

12. Beutelformvorrichtung nach Anspruch 10, wobei das Presskraft-Anpassungselement bereitgestellt ist, um eine Seite, welche in Kontakt mit dem zweiten Abstreifer ist, und die andere Seite gekoppelt mit der Abstreifer-Rückplatte aufzuweisen.

13. Beutelformvorrichtung nach Anspruch 10, wobei das Presskraft-Anpassungselement bereitgestellt ist, um eine Seite, welche in Kontakt mit dem zweiten Abstreifer ist, und die andere Seite gekoppelt mit der oberen Platte aufzuweisen.

14. Beutelformvorrichtung nach Anspruch 6, wobei der erste Abstreifer entlang eines Umfangs des Stanzlochs gebildet ist, wobei ein Durchgangsloch, welches durch obere und untere Flächen des ersten Abstreifers verläuft, in dem ersten Abstreifer gebildet ist, und
wobei der zweite Abstreifer an der oberen Platte durch ein Fixierelement fixiert ist, welches bereitgestellt ist, um durch das Durchgangsloch zu verlaufen.

15. Beutelformvorrichtung nach Anspruch 14, wobei, bei dem zweiten Abstreifer, eine Beutelfolie-Presskraft durch ein Presskraft-Anpassungselement angepasst wird, welches bereitgestellt ist, um durch das Durchgangsloch zu verlaufen, und
wobei das Presskraft-Anpassungselement bereitgestellt ist, um eine Seite, welche in Kontakt mit dem zweiten Abstreifer ist, und die andere Seite gekoppelt mit der oberen Platte aufzuweisen.

## Revendications

1. Appareil (10) de moulage de poche comprenant :
un plateau matrice (100) qui présente une forme de plaque plate de sorte qu'un film de poche soit supporté sur une partie supérieure de celle-ci et dans laquelle un trou (100a) de moulage de partie coupelle présentant une forme traversant des surfaces supérieure et inférieure de celle-ci soit formé ;
un premier extracteur (200) qui est conçu pour presser et fixer le film de poche depuis un côté supérieur du plateau matrice, et dans lequel un trou (200a) de poinçonnage présentant une forme traversant les surfaces supérieure et inférieure est formé au niveau d'une position correspondant au trou (100a) de moulage de partie coupelle ;
une partie poinçon (300) tirée vers l'intérieur et vers l'extérieur du trou (200a) de poinçonnage du premier extracteur (200) et du trou (100a) de moulage de partie coupelle du plateau matrice (100) pour mouler le film de poche ; et
un second extracteur (400) conçu pour faire saillie à partir de la surface inférieure du premier extracteur (200) et disposé le long d'une circonférence du trou (200a) de poinçonnage afin de presser et fixer le film de poche.

2. Appareil de moulage de poche selon la revendication 1, dans lequel le second extracteur est formé sous une forme annulaire présentant une circonférence interne et une circonférence externe,
dans lequel la circonférence interne est supérieure à une circonférence du trou de poinçonnage.

3. Appareil de moulage de poche selon la revendication 1, dans lequel, dans le second extracteur, une couche de revêtement par friction est formée sur une surface faisant face au plateau matrice.

4. Appareil de moulage de poche selon la revendication 1, dans lequel le premier extracteur est formé le long d'une circonférence du trou de poinçonnage,
dans lequel un trou d'insertion présentant une forme qui est évidée vers le haut à partir d'une partie inférieure du premier extracteur est formé dans le premier extracteur.

5. Appareil de moulage de poche selon la revendication 4, dans lequel la rainure d'insertion présente une section transversale horizontale présentant une forme correspondant à celle d'une section transversale horizontale du second extracteur, et
le second extracteur est disposé pour faire saillie à partir d'une surface inférieure du premier extracteur, dans lequel le second extracteur est disposé pour être tiré dans ou hors de la rainure d'insertion de manière à être mobile verticalement.

6. Appareil de moulage selon la revendication 1, comprenant en outre :
une plaque supérieure disposée au-dessus du premier extracteur ; et
une plaque inférieure disposée sous le plateau matrice,
dans lequel la plaque supérieure et la plaque inférieure sont accouplées l'une à l'autre au niveau d'un bord par un organe d'accouplement présentant une longueur dans une direction verticale.

7. Appareil de moulage selon la revendication 6, comprenant en outre :
une plaque arrière d'extracteur disposée entre le premier extracteur et la plaque supérieure pour fixer au moins l'un du premier extracteur et du second extracteur ; et
une plaque arrière de plateau matrice disposée entre la plaque inférieure et le plateau matrice pour supporter le plateau matrice à partir d'un côté inférieur.

8. Appareil de moulage de poche selon la revendication 7, dans lequel le premier extracteur est formé le long d'une circonférence du trou de poinçonnage, et dans lequel un trou traversant passant à travers des surfaces supérieure et inférieure du premier extracteur est formé dans le premier extracteur, et
le second extracteur est fixé à la plaque arrière d'extracteur par un organe de fixation disposé pour passer à travers le trou traversant.

9. Appareil de moulage de poche selon la revendication 8, dans lequel l'organe de fixation est disposé à la manière d'une butée dans laquelle une longueur est modifiée, mais n'est pas modifiée à une longueur prédéterminée ou inférieure ou à la longueur prédéterminée ou supérieure, mais est fixe.

10. Appareil de moulage de poche selon la revendication 8, dans lequel, dans le second extracteur, la force de pression du film de poche est ajustée par un organe d'ajustement de force de pression disposé pour passer à travers le trou traversant.

11. Appareil de moulage de poche selon la revendication 10, dans lequel le dispositif d'ajustement de force de pression comprend un ressort présentant une élasticité dans une direction longitudinale.

12. Appareil de moulage de poche selon la revendication 10, dans lequel l'organe d'ajustement de force de pression est disposé pour présenter un côté qui est en contact avec le second extracteur et l'autre côté accouplé à la plaque arrière d'extracteur.

13. Appareil de moulage de poche selon la revendication 10, dans lequel l'organe d'ajustement de force de pression est disposé pour présenter un côté qui est en contact avec le second extracteur et l'autre côté accouplé à la plaque supérieure.

14. Appareil de moulage de poche selon la revendication 6, dans lequel le premier extracteur est formé le long d'une circonférence du trou de poinçonnage, un trou traversant passant à travers des surfaces supérieure et inférieure du premier extracteur étant formé dans le premier extracteur, et
le second extracteur est fixé à la plaque supérieure par un organe de fixation disposé pour passer à travers le trou traversant.

15. Appareil de moulage de poche selon la revendication 14, dans lequel, dans le second extracteur, la force de pression de film de poche est ajustée par un organe d'ajustement de force de pression disposé pour passer à travers le trou traversant, et
l'organe d'ajustement de force de pression est disposé pour présenter un côté qui est en contact avec le second extracteur et l'autre côté accouplé à la plaque supérieure.
